# EUROPÄISCHE PATENTSCHRIFT

(11) **EP 1 106 789 B1**
(45) Veröffentlichungstag und Bekanntmachung des Hinweises auf die Patenterteilung: **15.03.2006**
(21) Anmeldenummer: 00124704.8
(22) Anmeldetag: 11.11.2000
(51) Int. Cl.: F01L 1/02, F16H 7/08

(54) **Kettentrieb eines V-Motors mit obenliegenden Nockenwellen**
Chain drive for a V-type engine with overhead camshafts
Chaine de distribution pour moteur en V à arbres à cames en tête

(30) Priorität: 10.12.1999 DE 19959594
(43) Veröffentlichungstag der Anmeldung: 13.06.2001
(73) Patentinhaber: Bayerische Motoren Werke Aktiengesellschaft, 80809 München (DE)
(72) Erfinder: Halmanseger, Leonhard, 83059 Kolbermoor (DE); Brandl, Rudolf, 80935 München (DE)

(56) Entgegenhaltungen:
- DE-A- 3 921 715
- DE-A- 4 443 095
- DE-A- 19 631 607
- DE-C- 4 035 823
- DE-U- 29 719 734
- US-A- 5 720 684

## Beschreibung

Die Erfindung bezieht sich nach dem Oberbegriff des Patentanspruches 1 auf einen Kettentrieb eines V-Motors mit obenliegenden Nockenwellen, die von einer Kurbelwelle jeweils mittels einer gesonderten Kette angetrieben sind, wobei einem jeweiligen Los-Trum der Ketten schwenkbeweglich zugeordnete Spannschienen von bauartgleichen, im wesentlichen zueinander quer gerichtet angeordneten Kettenspannern beaufschlagt sind, wobei der erste Kettenspanner im Bereich einer einlassseitigen Längsseite eines ersten Zylinderkopfes und der zweite Kettenspanner im Bereich einer auslassseitigen Längsseite eines zweiten Zylinderkopfes angeordnet ist.

Ein derartiger Kettentrieb für einen V-Motor ist beispielsweise aus der DE 39 21 715 A1 bekannt. Nachteilig bei dieser bekannten Anordnung ist, dass der zweite Kettenspanner im Bereich einer auslassseitigen Längsseite des Zylinderkopfes bei knapp bemessenem Motorraum von oben nicht ohne weiteres zugänglich ist.

Der Erfindung liegt daher die Aufgabe zugrunde, für einen gattungsgemäßen Kettentrieb mit von außen zugänglichen Kettenspannern eine von oben zugängliche Anordnung bauartgleicher, hydraulischer Kettenspanner mit einwandfreier Entlüftung an V-Motoren aufzuzeigen.

Diese Aufgabe ist mit dem Patentanspruch 1 dadurch gelöst, dass der erste Kettenspanner mit einer vertikalen bis vertikal geneigten Ausrichtung und der zweite Kettenspanner mit einer horizontalen bis horizontal geneigten Ausrichtung jeweils über einen hydraulisch betätigten Spannkolben mit einem als frei drehbare Kugel ausgebildeten Endabschnitt auf jeweils eine in den freien Endbereichen der Spannschienen geneigt angeordnete Kontaktrampe einwirkt, und dass die bauartgleichen, hydraulischen Kettenspanner jeweils mit lagebedingt unterschiedlichen Entlüftungsrichtungen dienenden Leckage-Einrichtungen in beiden Endbereichen jedes Spannkolbens ausgerüstet sind, wobei jede einer Spannkolben-Dämpfung dienende Leckage-Einrichtung entsprechend der Einbaulage des jeweiligen Kettenspanners zugleich einer Systementlüftung dient.

Mit der erfindungsgemäßen Gestaltung der Spannschienen mit geneigt angeordneten, per se aus der DE 42 06 071 C2 bekannten Kontaktrampen für kugelartig gestaltete Endabschnitte der Spannkolben kann in vorteilhafter Weise ein Kettenspanner in im wesentlichen vertikaler Richtung und der andere Kettenspanner in im wesentlichen horizontaler und damit von außen gut zugänglich bzw. montierbar relativ zum Gehäuse des jeweiligen V-Motors angeordnet werden, wobei in weiterer erfindungsgemäßer Ausgestaltung der zueinander quer gerichtet angeordneten Kettenspanner für deren einwandfreie Entlüftung in der jeweiligen Einbauposition jeder der bauartgleichen Kettenspanner zwei voneinander unabhängig wirksame Leckage-Einrichtungen aufweist.

Vorteilhafte Ausgestaltungen der Erfindung sind in den Unteransprüchen angegeben.

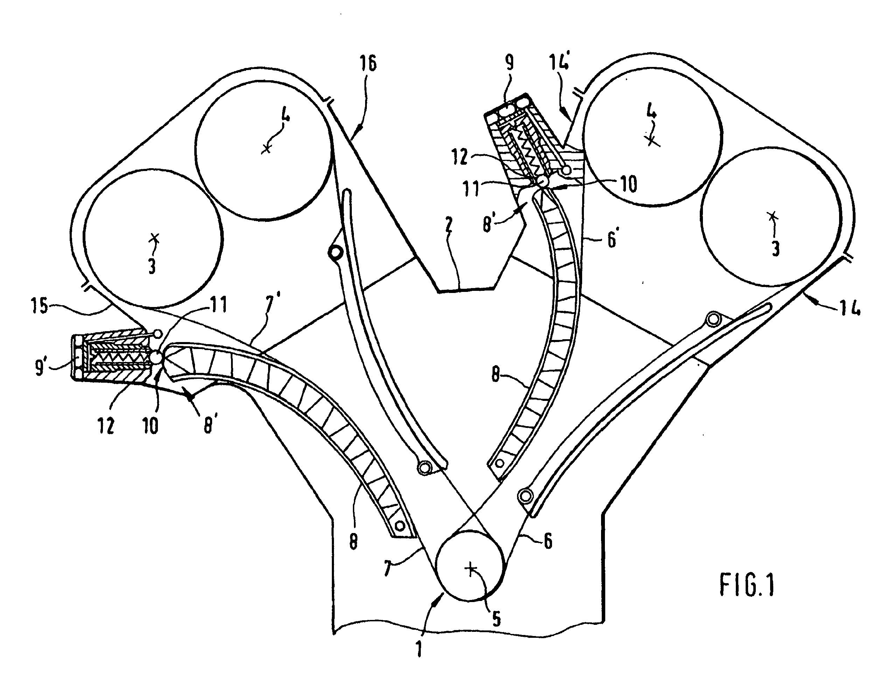

Die Erfindung ist anhand eines in der Zeichnung dargestellten Ausführungsbeispiels beschrieben. Es zeigt
- Figur 1: Kettentriebe für obenliegende Nockenwelle eines in Stimansicht dargestellten V-Motors,
- Figur 2: einen der bauartgleichen Kettenspanner im Längsschnitt.

Bei einem Kettentrieb 1 eines V-Motors 2 mit obenliegenden Nockenwellen 3, 4 sind diese von einer Kurbelwelle 5 jeweils mittels einer gesonderten Kette 6, 7 angetrieben, wobei einem jeweiligen Los-Trum 6', 7' der Ketten 6, 7 schwenkbeweglich zugeordnete Spannschienen 8 von bauartgleichen, hydraulischen Kettenspannern 9, 9' beaufschlagt sind.

Erfindungsgemäß weisen die Spannschienen 8 in ihren freien Endbereichen 8' derart geneigt angeordnete Kontaktrampen 10 für kugelartig gestaltete Endabschnitte 11 an Spannkolben 12 der bauartgleichen Kettenspanner 9, 9' auf, dass der erste Kettenspanner 9 im Bereich einer einlassseitigen Längsseite 14' eines ersten Zylinderkopfes 14 des V-Motors 2 und der zweite Kettenspanner 9' im Bereich einer auslassseitigen Längsseite 15 eines zweiten Zylinderkopfes 16 des V-Motors 2 angeordnet ist Weiter ist zur einwandfreien Entlüftung des Hydrauliksystems der bauartgleichen Kettenspanner 9, 9' erfindungsgemäß vorgesehen, dass die zueinander im wesentlichen quer gerichtet angeordneten Kettenspanner 9, 9' mit einem vertikal geneigt ausgerichteten ersten Kettenspanner 9 und einem horizontal geneigt ausgerichteten zweiten Kettenspanner 9' jeweils mit unterschiedlichen Entlüftungsrichtungen dienenden Leckage-Einrichtungen 17, 18 in beiden Endbereichen jedes Spannkolbens 12 ausgerüstet sind.

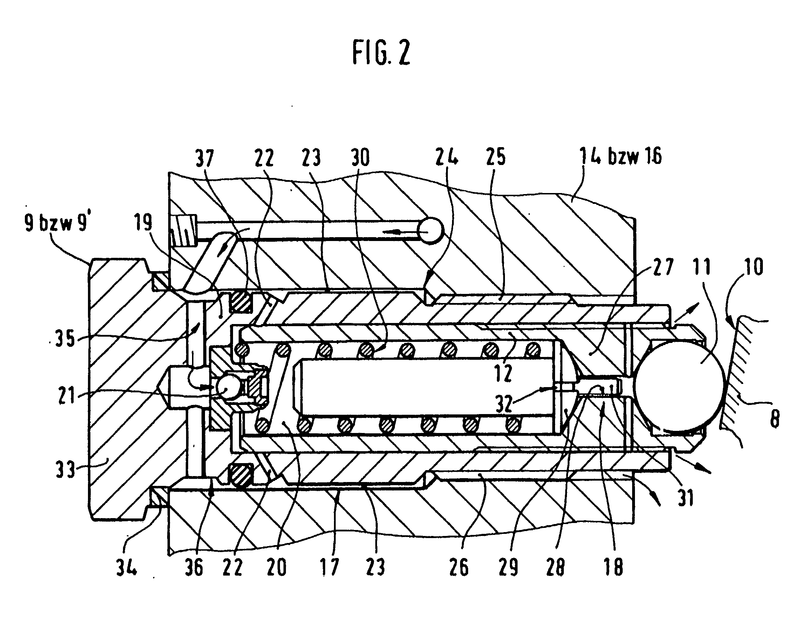

Wie aus Figur 2 näher hervorgeht, ist jeder Spannkolben 12 der bauartgleichen Kettenspanner 9, 9' federbelastet in einem hohlen Einschraubteil 19 gleitbeweglich eingesetzt und begrenzt eine hydraulische Druckkammer 20, der stimseitig ein Hydraulikmedium über ein Rückschlagventil 21 zugeführt ist. Für eine erste, beim vertikal geneigt ausgerichteten ersten Kettenspanner 9 zur Entlüftung dienende Dämpfungs-Leckage 17 sind ein im wesentlichen radialer Kanal 22 im Einschraubteil 19 und ein angrenzender Umfangsspalt 23 zwischen Einschraubteil 19 und einer zylinderkopfseitigen Einschraubbohrung 24 sowie eine anschließende, durchlässig gestaltete Gewindeverschraubung 25 vorgesehen. Zur besseren Durchlässigkeit der Gewindeverschraubung 25 kann diese mit einer schmalen Nut 26 ausgebildet sein.

Für eine zweite, beim horizontal mit dem Endabschnitt 11 nach oben geneigt ausgerichteten Kettenspanner 9' zur Entlüftung dienende Dämpfungs-Leckage 18 ist in einem den kugefartig gestalteten Endabschnitt 11 tragenden Kolbenboden 27 des hohl ausgebildeten Spannkolbens 12 ein auf Leckage-Maß gedrosselter Ablaufkanal 28 vorgesehen.

Beide Dämpfungs-Leckagen 17 und 18 jedes Kettenspanners 9, 9' können im übrigen bei üblicher Kettenspannung eine parallele Dämpfung bewirken, wie dies beispielsweise per se aus der DE 40 35 823 C1 bekannt ist.

Weiter ist insbesondere aus der Figur 2 ersichtlich, dass der Kolbenboden 27 innenseitig des hohlen Spannkolbens 12 kegelförmig gestaltet ist zur Anlage einer ballig oder kegelförmig ausgebildeten Stützscheibe 29, an der einerseits eine im Spannkolben 12 angeordnete, gegen das Einschraubteil 19 rückschlagventilseitig abgestützte Druckfeder 30 anliegt, und an der andererseits ein den Ablaufkanal 28 im Kolbenboden 27 drosselnder Drosselzapfen 31 angeordnet ist, wobei die Stützscheibe 29 zum Ablaufkanal 28 gerichtete Überlaufnuten 32 aufweist.

Schließlich umfasst jedes Einschraubteil 19 der von außen montierbaren Kettenspanner 9, 9' einen Schraubenkopf 33 mit einem Dichtring 34, der einerseits eine einem Hydraulikzulauf aus dem jeweiligen Zylinderkopf 14, 16 zur ventilgesteuerten Druckkammer 20 dienende, mit Überlaufkanälen 35 verbundene Umfangsnut 36 abdichtet, die gegen den Umfangsspalt 23 der ersten Dämpfungs-Leckage 17 mittels eines O-Ringes 37 abgedichtet ist.

## Patentansprüche

1. Kettentrieb eines V-Motors mit obenliegenden Nockenwellen,
- die von einer Kurbelwelle (5) jeweils mittels einer gesonderten Kette (6, 7) angetrieben sind, wobei
- einem jeweiligen Los-Trum (6', 7') der Ketten (6, 7) schwenkbeweglich zugeordnete Spannschienen (8) von bauartgleichen, im wesentlichen zueinander quer gerichtet angeordneten Kettenspannern (9, 9') beaufschlagt sind, wobei
- der ersten Kettenspanner (9) im Bereich einer einlassseitigen Längsseite (13) eines ersten Zylinderkopfes (14) und der zweite Kettenspanner (9') im Bereich einer auslassseitigen Längsseite (15) eines zweiten Zylinderkopfes (16) angeordnet ist,
**dadurch gekennzeichnet,**
- **dass** der erste Kettenspanner (9) mit einer vertikalen bis vertikal geneigten Ausrichtung und der zweite Kettenspanner (9') mit einer horizontalen bis horizontal geneigten Ausrichtung jeweils über einen hydraulisch betätigten Spannkolben (12) mit einem als frei drehbare Kugel ausgebildeten Endabschnitt (11) auf jeweils eine in den freien Endbereichen (8') der Spannschienen (8) geneigt angeordnete Kontaktrampe (10) einwirkt, und
- **dass** die bauartgleichen, hydraulischen Kettenspanner (9, 9') jeweils mit lagebedingt unterschiedlichen Entlüftungsrichtungen dienenden Leckage-Einrichtungen (17, 18) in beiden Endbereichen jedes Spannkolbens (12) ausgerüstet sind, wobei
- jede einer Spannkolben-Dämpfung dienende Leckage-Einrichtung (17, 18) entsprechend der Einbaulage des jeweiligen Kettenspanners (9, 9') zugleich einer Systementlüftung dient.

2. Kettentrieb nach Anspruch 1, **dadurch gekennzeichnet,**
- **dass** jeder Spannkolben (12) der bauartgleichen Kettenspanner (9, 9') federbelastet in einem hohlen Einschraubteil (19) gleitbeweglich eingesetzt eine hydraulische Druckkammer (20) begrenzt, der
- stimseitig ein Hydraulikmedium über ein Rückschlagventil (21) zugeführt ist, wobei
- für eine erste Dämpfungs-Leckage (17) ein im wesentlichen radialer Kanal (22) im Einschraubteil (19) und ein angrenzender Umfangsspalt (23) zwischen Einschraubteil (19) und einer zylinderkopfseitigen Einschraubbohrung (24) sowie eine anschließende, durchlässig gestaltete Gewindeverschraubung (25) vorgesehen sind, und
- für eine zweite Dämpfungs-Leckage (18) in einem den kugelartig gestalteten Endabschnitt (11) tragenden Kolbenboden (27) des hohl ausgebildeten Spannkolbens (12) ein auf Leckage-Maß gedrosselter Ablaufkanal (28) vorgesehen ist.

3. Kettentrieb nach Anspruch 2, **dadurch gekennzeichnet,**
- **dass** der Kolbenboden (27) innenseitig des hohlen Spannkolbens (12) kegelförmig gestaltet ist zur Anlage einer ballig oder kegelförmig ausgebildeten Stützscheibe (29), an der
- einerseits eine im Spannkolben (12) angeordnete, gegen das Einschraubteil (19) rückschlagventilseitig abgestützte Druckfeder (30) anliegt, und
- an der andererseits ein den Ablaufkanal (28) im Kolbenboden (27) drosselnder Drosselzapfen (31) angeordnet ist, wobei
- die Stützscheibe (29) zum Ablaufkanal (28) gerichtete Überlaufnuten (32) aufweist.

4. Kettentrieb nach Ansprüchen 2 oder 3, **dadurch gekennzeichnet,**
- **dass** jedes Einschraubteil (19) der von außen montierbaren Kettenspanner (9, 9') einen Schraubenkopf (33) mit einem Dichtring (34) umfasst, und
- **dass** eine einem Hydraulikzulauf aus dem jeweiligen Zylinderkopf (14, 16) zur ventilgesteuerten, hydraulischen Druckkammer (20) dienende, mit Überlaufkanälen (35) verbundene Umfangsnut (36) gegen den Umfangsspalt (23) der ersten Dämpfungs-Leckage (17) mittels eines O-Ringes (37) abgedichtet ist.

## Claims

1. A chain drive of a V-type engine with overhead camshafts,
- which are each driven by a crankshaft (5) via an individual chain (6, 7), wherein
- tightening rails (8) of identically constructed chain tighteners (9, 9') aligned substantially transversely of one another are actuated in pivotable association with the respective slack runs (6', 7') of the chains (6, 7), wherein
- the first chain tightener (9) is disposed in the neighbourhood of an inlet-side longitudinal side (13) of a first cylinder head (14) and the second chain tightener (9') is disposed in the neighbourhood of an outlet-side longitudinal side (15) of a second cylinder head (16),
**characterised in that**
- the first chain tightener (9), which has a vertical or vertically inclined alignment, and the second chain tightener (9'), which has a horizontal or horizontally inclined alignment, each act via a hydraulically operated tightening piston (12) comprising a freely rotatable spherical end portion (11) on a respective contact slope (10) disposed at an angle in the free end regions (8') of the tightening rails (8), and
- the identically constructed hydraulic chain tighteners (9, 9') are each equipped with venting devices in the form of leakage devices (17, 18), differing with regard to their position, in both end regions of each tightening piston (12), wherein
- each leakage device (17, 18) for cushioning a tightening piston also ventilates the system in dependence on the position in which the respective chain tightener (9, 9') is installed.

2. A chain drive according to claim 1, **characterised in that**
- each tightening piston (12) of the identically constructed chain tighteners (9, 9') is spring loaded and slidably inserted into a hollow screw-in part (19) and bounds a hydraulic pressure chamber (20) which
- is supplied at its end with a hydraulic medium through a non-return valve (21), wherein
- for the purpose of first cushioning or leakage device (17), a substantially radial duct (22) in the screw-in part (19) and an adjoining peripheral gap (23) between the screw-in part (19) and a screw-in bore (24) on the same side as the cylinder head are provided together with an adjoining permeable screw coupling (25), and
- for the purpose of second damping and leakage device (18), a drainage duct (28) throttled in dependence on the amount of leakage is provided **in that** end (27) of the hollow tightening piston (12) which holds the spherical end portion (11).

3. A chain drive according to claim 2, **characterised in that**
- the piston end (27) is conical on the inside of the hollow clamping piston (12) in order to abut a spherical or conical supporting plate (29), which
- on one side adjoins a pressure spring (30) disposed in the tightening piston (12) and braced against the screw-in part (19) on the non-return valve side and
- on the other side adjoins a plug (31) for throttling the drainage duct (28) in the piston end (27), wherein
- the supporting plate (29) has overflow grooves (32) directed towards the drainage duct (28).

4. A chain drive according to claim 2 or claim 3, **characterised in that**
- each screw-in part (19) of the chain tighteners (9, 9'), which can be fitted from the exterior, comprises a screw head (33) and a sealing ring (34), and
- a peripheral groove (36) connected to throughflow ducts (35) and of use for supplying hydraulic fluid from the respective cylinder head (14, 16) to the valve-controlled hydraulic pressure chamber (20) is sealed against the peripheral gap (23) in the first cushioning and leakage means (17) by an O-ring (37).

## Revendications

1. Entraînement par chaîne d'un moteur en V avec :
- des arbres à cames en tête entraînés par un vilebrequin (5) respectivement au moyen d'une chaîne (6, 7) distincte,
- des glissières de tendeur (8) pivotantes associées à un jeu de brins (6', 7') respectif des chaînes (6, 7) et sollicitées par des tendeurs de chaîne (9, 9') de construction identique disposés pour l'essentiel transversalement l'un par rapport à l'autre, et dont
- le premier tendeur de chaîne (9) est disposé dans la zone d'une face longitudinale (13) côté admission d'une première culasse (14) et le deuxième tendeur de chaîne (9') dans la zone d'une face longitudinale (15) côté échappement d'une deuxième culasse (16),
**caractérisé en ce que**
- le premier tendeur de chaîne (9), avec une orientation verticale à verticalement inclinée et le deuxième tendeur de chaîne (9') avec une orientation horizontale à horizontalement inclinée, agissent chacun par un piston de tension (12) actionné hydrauliquement et présentant un segment terminal (11) en forme d'une sphère pivotant librement sur chaque fois une rampe de contact (10) disposée dans les zones terminales libres (8') des glissières de tendeur (8), et
- les tendeurs de chaîne hydrauliques (9, 9') de construction identique sont munis chacun de dispositifs de fuite (17, 18) servant à l'aération dans différentes directions en fonction de la position dans les deux zones terminales de chaque piston de tension (12),
- chaque dispositif de fuite (17, 18) servant à un amortissement du piston de tension servant également à une aération du système suivant la position de montage du tendeur de tension (9, 9') respectif.

2. Entraînement par chaîne selon la revendication 1,
**caractérisé en ce que**
- chaque piston de tension (12) des tendeurs de chaîne (9, 9') de construction identique est inséré sous contrainte d'un ressort mobile en coulissement dans un élément à visser (19) creux et délimite une chambre de pression hydraulique (20), qui
- est alimentée côté frontal en liquide hydraulique par l'intermédiaire d'un clapet anti-retour (21), et
- pour une première fuite d'amortissement (17) on prévoit un canal (22) pour l'essentiel radial dans l'élément à visser (19) et une fente périphérique (23) adjacente située entre l'élément à visser (19) et un alésage à visser (24) côté culasse, ainsi qu'un vissage fileté (25) adjacent perméable, et
- pour une deuxième fuite d'amortissement (18) dans un fond de piston (27) du piston de tension (12) creux portant le segment terminal (11) sphérique on prévoit un canal d'écoulement (28) étranglé selon la valeur de la fuite.

3. Entraînement par chaîne selon la revendication 2,
**caractérisé en ce que**
- le fond de piston (27) à l'intérieur du piston de tension (12) creux présente une forme conique pour recevoir une rondelle d'appui (29) bombée ou conique sur laquelle
- est appliqué d'une part un ressort de pression (30) disposé dans le piston de tension (12) et prenant appui côté clapet anti-retour contre l'élément à visser (19), et qui
- comporte d'autre part un téton d'étranglement (31) étranglant le canal d'écoulement (28) dans le fond de piston (27), et
- la rondelle d'appui (29) présente des rainures de trop-plein (32) orientées vers le canal d'écoulement (28).

4. Entraînement par chaîne selon les revendications 2 ou 3,
**caractérisé en ce que**
- chaque élément à visser (19) des tendeurs de chaîne (9, 9') pouvant être montés de l'extérieur présente une tête de vis (33) avec un joint d'étanchéité (34), et
- une rainure périphérique (36) reliée à des canaux de trop-plein (35) servant à une amenée hydraulique depuis la culasse (14, 16) respective vers la chambre de pression (20) commandée par soupape est étanchée par rapport à la fente périphérique (23) de la première fuite d'amortissement (17) au moyen d'un joint torique (37).
